Europäisches Patentamt

European Patent Office

Office européen des brevets

(11) Veröffentlichungsnummer: **0 289 767**
**A2**

(12) **EUROPÄISCHE PATENTANMELDUNG**

(21) Anmeldenummer: 88104628.8

(51) Int. Cl.⁴: **C11D 3/12 , C11D 3/37 , C11D 3/08**

(22) Anmeldetag: 23.03.88

(30) Priorität: 06.05.87 DE 3715052

(43) Veröffentlichungstag der Anmeldung:
09.11.88 Patentblatt 88/45

(84) Benannte Vertragsstaaten:
AT BE CH DE ES FR GB IT LI NL SE

(71) Anmelder: Degussa Aktiengesellschaft
Weissfrauenstrasse 9
D-6000 Frankfurt am Main 1(DE)

(72) Erfinder: Diehl, Manfred, Dr.
Zeisselstrasse 7
D-6000 Frankfurt 1(DE)
Erfinder: Leonhardt, Wolfgang, Dr.
Röderbergweg 41
D-6000 Frankfurt 1(DE)

(54) Körniges Adsorptionsmittel.

(57) Körniges Adsorptionsmittel mit hohem Aufnahmevermögen für flüssige bis pastöse Wasch-und Reinigungsmittelbestandteile, gekennzeichnet durch die folgenden Komponenten:

(a) 60 bis 80 Gewichtsprozent eines zum Kationenaustausch befähigten, synthetischen, gebundenes Wasser enthaltenden Natriumsilikats,

(b) 0,1 bis 8 Gewichtsprozent Natriumsilikat der Zusammensetzung $Na_2O \, SiO_2 = 1 : 2$ bis $1 : 3,5$,

(c) 3 bis 15 Gewichtsprozent eines Gemisches zweier verschiedener Acrylsäurepolymerisate, die eine unterschiedliche Viskositätszahl aufweisen,

(d) 8 bis 18 Gewichtsprozent bei einer Trocknungstemperatur von 145 °C entfernbares Wasser,

(e) 0 bis 5 Gewichtsprozent eines nichtionischen, Polkolethergruppenaufweisenden Tensids, wobei das Adsorptionsmittel eine mittlere Korngröße von 0,2 bis 1,2 mm aufweist und der Anteil mit einer Korngröße von weniger als 0,05 mm nicht mehr als 2 Gewichtsprozent und der Anteil mit einer Korngröße von mehr als 2 mm nicht mehr als 5 Gewichtsprozent beträgt und das Schüttgewicht 400 bis 700 g/l beträgt.

EP 0 289 767 A2

## Körniges Adsorptionsmittel

Die Erfindung betrifft ein körniges Adsorptionsmittel mit hohem Aufnahmevermögen für flüssige bis pastöse Wasch-und Reinigungsmittelbestandteile, insbesondere flüssige bzw. bei Temperaturen unterhalb 40 °C schmelzende nichtionische Tenside, das sich vorzüglich für den Einsatz in phosphatfreien bzw. phosphatarmen Wasch-und Reinigungsmitteln eignet.

Nichtionische Tenside besitzen bekanntlich ein sehr hohes Reinigungsvermögen, was sie insbesondere zur Verwendung in Kaltwaschmitteln bzw. 60 °C-Waschmitteln geeignet macht. Ihr Anteil läßt sich bei der allgemeinen üblichen Waschmittelherstellung mittels Sprühtrocknung jedoch nicht wesentlich über 8 bis 10 Gewichtsprozent hinaus steigern, da es sonst zu einer übermäßigen Rauchbildung in der Abluft der Sprühtürme sowie mangelhaften Rieseleigenschaften des Sprühpulvers kommt. Es wurden daher Verfahren entwickelt, bei denen das flüssige bzw. geschmolzene nichtionische Tensid auf das zuvor sprühgetrocknete Pulver aufgemischt bzw. auf eine Trägersubstanz aufgesprüht wird. Als Trägersubstanz wurden lockere, insbesondere sprühgetrocknete Phosphate, Borate bzw. Perborat, Natriumalumosilikat (Zeolith), Siliciumdioxid (Aerosil) oder in bestimmter Weise zuvor hergestellte Salzgemische vorgeschlagen, jedoch weisen alle bekannten Mittel gewisse Nachteile auf. Phosphate sind wegen ihrer eutrophierenden Eigenschaften vielfach unerwünscht. Borate bzw. Perborate besitzen ein nur beschränktes Aufnahmevermögen für flüssige Stoffe, was auch für feinpulvrige Zeolithe gilt, während spezielle Adsorptionsmittel, wie Kieselgur und Aerosil, den Ascheanteil im Waschmittel bzw. auf dem zu reinigenden Gut erhöhen und keinen Beitrag zur Waschwirkung liefern.

Saugfähige Trägerkörner, die aus mehreren Bestandteilen bestehen und zumeist durch Sprühtrocknung hergestellt werden, sind z. B. aus US 3 849 327, US 3 886 098 und US 3 838 027 sowie US 4 269 722 (DE 27 42 683) bekannt. Diese insbesondere zur Adsorption von nichtionischen Tensiden entwickelten Trägerkörner enthalten jedoch erhabliche Mengen ans Phosphaten, was ihre Einsatzmöglichkeiten einschränkt.

Phosphatfreie Trägerkörner sind aus DE 32 06 265 bekannt. Sie bestehen aus 25 bis 52 % Natriumcarbonat bzw. -hydrogencarbonat, 10 bis 50 % Zeolith, 0 bis 18 % Natriumsilikat und 1 bis 20 % Bentonit bzw. 0,05 bis 2 % Polyacrylat. Der hohe Anteil an Carbonat begünstigt jedoch eine Ausbildung von Calciumcarbonat in hartem Wasser und damit die Bildung von Inkrustationen auf der Textilfaser bzw. den Heizelementen in der Waschmaschine. Außerdem ist das Aufnahmevermögen der vorstehend zitierten Trägerkörner begrenzt. Bei Anteilen von mehr als 25 Gewichtsprozent an aufgemischten flüssigen bzw. klebrigen nichtionischen Tensiden nimmt die Rieselfähigkeit der Produkte erheblich ab und ist oberhalb 30 Gewichtsprozent unbefriedigend.

Es bestand daher die Aufgabe, ein körniges Adsorptionsmittel zu entwickeln, das die aufgeführten Nachteile vermeidet und ein noch höheres Adsorptionsvermögen aufweist.

Gegenstand der Erfindung ist ein körniges Adsorptionsmittel mit hohem Aufnahmevermögen für flüssige bis pastöse Wasch - und Reinigungsmittelbestandteile, gekennzeichnet durch die folgenden Bestandteile:

(a) 60 bis 80 Gewichtsprozent eines zum Kationenaustausch befähigten, synthetische, gebundenes Wasser enthaltenden Natriumalumosilikats

(b) 0,1 bis 8 Gewichtsprozent Natriumsilikat der Zusammensetzung $Na_2O : SiO_2 = 1 : 2$ bis $1 : 3,5$,

(c) 3 bis 15 Gewichtsprozent eines Gemisches zweier verschiedener Acrylsäurepolymerisate, die eine unterschiedliche Viskositätszahl aufweisen,

(d) 8 bis 18 Gewichtsprozent bei einer Trocknungstemperatur von 145 °C entfernbares Wasser,

(e) 0 bis 5 Gewichtsprozent eines nichtionischen, Polyyglykolethergruppen aufweisenden Tensids, wobei das Adsorptionsmittel eine mittlere Korngröße von 0,2 bis 1,2 mm aufweist und der Anteil mit einer Korngröße von weniger als 0,05 mm nicht mahr als 2 Gewichtsprozent und der Anteil mit einer Krongröße von mehr als 2 mm nicht mehr als 5 Gewichtsprozent beträgt und das Schüttgewicht 400 bis 700 g/l beträgt.

Der Bestandteil (a), der in Anteilen von 60 bis 80, vorzugsweise 65 bis 75 Gewichtsprozent anwesend ist, besteht aus synthetischem, gebundenes Wasser enthaltendem Natriumalumosilikat, vorzugsweise vom Zeolith A-Typ.

In einer bevorzugten Ausführungsform der Erfindung kann als wasserunlösliches, zum Binden von Calciumionen befähigtes Silikat eine feinverteilte, gebundenes Wasser enthaltende, synthetisch hergestellte, wasserunlösliche Verbindung der allgemeinen Formel

$$(Kat_{2/n}O)_x . Me_2O_3 . (SiO_2)_y \ (I),$$

in der Kat ein mit Calcium austauschbares Kation der Wertigkeit n, x eine Zahl von 0,7 bis 1,5, Me Bor oder Aluminium und y eine Zahl von 0,8 bis 6 bedeuten, einsetzen. Besonders bevorzugt werden Aluminiumsilikate verwendet.

Bei den einzusetzenden Aluminiumsilikaten kann es sich um amorphe oder um kristalline Produkte handeln, wobei selbstverständlich auch Mischungen von amorphen und kristallinen Produkten und auch teilkristalline Produkte einsetzbar sind. Die Aluminiumsilikate können natürlich vorkommende oder aber synthetisch hergestellte Produkte sein, wobei die synthetisch hergestellten Produkte bevorzugt sind. Die Herstellung kann z. B. durch Reaktion von wasserlöslichen Silikaten mit wasserlöslichen Aluminaten in Gegenwart von Wasser erfolgen. Zu diesem Zweck können wässrige Lösungen der Ausgangsmaterialien miteinander vermischt oder eine in festem Zustand vorliegende Komponente mit der anderen, als wässrige Lösung vorliegenden Komponente umgesetzt werden. Auch durch Vermischen beider, in festem Zustand vorliegender Komponenten erhält man bei Anwesenheit von Wasser die gewünschten Aluminiumsilikate. Auch aus $Al(OH)_3$, $Al_2O_3$ oder $SiO_2$ lassen sich durch Umsetzen mit Alkalisilikat-bzw. Aluminatlösungen Aluminiumsilikate herstellen. Die Herstellung kann auch nach weiteren bekannten Verfahren erfolgen. Insbesondere bezieht sich die Erfindung auf Aluminiumsilikate, die eine dreidimensionale Raumgitterstruktur aufweisen.

Das bevorzugte, etwa im Bereich von 100 bis 200 mg CaO/g AS meist bei etwa 100 bis 180 mg CaO/g AS liegende Calciumbindevermögen findet sich vor allem bei Verbindungen der Zusammensetzung:

$$0,7 - 1,1 \; Na_2O \cdot Al_2O_3 \cdot 1,3 - 3,3 \; SiO_2$$

Die Teilchengröße der einzelnen Aluminiumsilikatpartikel kann verschieden sein und z. B. im Bereich zwischen 0,1 $\mu$ und 0,1 mm liegen. Diese Angabe bezieht sich auf die Primärteilchengröße, d. h., die Größe der bei der Fällung und gegebenenfalls der anschließenden Kristallisation anfallenden Teilchen. Mit besonderem Vorteil verwendet man Aluminiumsilikate, die zu wenigstens 80 Gew.-% aus Teilchen einer Größe von 10 bis 0,01 $\mu$, insbesondere von 8 bis 0,1 $\mu$ bestehen.

Vorzugsweise enthalten diese Aluminiumsilikate keine Primär-bzw. Sekundärteilchen mehr mit Durchmessern oberhalb von 45 $\mu$. Als Sekundärteilchen werden Teilchen, die durch Agglomeration der Primärteilchen zu größeren Gebilden entstanden sind, bezeichnet.

Im Hinblick auf die Agglomeration der Primärteilchen zu größeren Gebilden hat sich die Verwendung der von ihrer Herstellung noch feuchten Aluminiumsilikate zur Herstellung der erfindungsgemäßen Suspensionen besonders bewährt, da sich herausgestellt hat, daß bei Verwendung dieser noch feuchten Produkte eine Bildung von Sekundärteilchen praktisch vollständig unterbunden wird.

In einer besonders bevorzugten Ausführungsform der Erfindung wird als Komponente A pulverförmiger Zeolith des Typs A mit besonders definiertem Teilchenspektrum eingesetzt.

Derartige Zeolithpulver können gemäß DE-AS 24 47 021, DE-AS 25 17 218, DE-OS 26 52 419, DE-OS 26 51 420, DE-OS 26 51 436, DE-OS 26 51 437, DE-OS 26 51 445, DE-OS 26 51 485 hergestellt werden. Sie weisen dann die dort angegebenen Teilchenverteilungskurven auf.

In einer besonders bevorzugten Ausführungsform kann ein pulverförmiger Zeolith des Typs A verwendet werden, der die in der DE-OS 26 51 485 beschriebene Teilchengrößenverteilung aufweist.

Der Bestandteil (b) besteht aus Natriumsilikat der Zusammensetzung $Na_2O : SiO_2 = 1 : 2$ bis $1 : 3,5$, vorzugsweise $1 : 2,5$ bis $1 : 3,3$. Auch Gemische von Silikaten mit unterschiedlichem Alkaligehalt können verwendet werden, beispielsweise ein Gemisch aus $Na_2O : SiO_2 = 1 : 2$ und $Na_2O : SiO_2 = 1 : 2,5 - 3,3$. Der Anteil des Natriumsilikates beträgt 0,1 bis 8 Gewichtsprozent, vorzugsweise 0,5 bis 5 Gewichtsprozent und insbesondere 1 bis 3 Gewichtsprozent.

Die Komponente (c) besteht aus einem Gemisch zweier verschiedener Acrylsäurepolymerisate, die eine unterschiedliche Viskositätszahl aufweisen.

Das Gemisch der beiden verschiedenen Acrylsäurepolymerisaten kann vorzugsweise aus zwei Homopolymerisaten bestehen.

In einer anderen Ausführungsform der Erfindung kann das Gemisch der beiden Acrylsäurepolymerisate aus einem Homopolymerisat und einem Copolymerisat bestehen.

In einer weiteren Ausführungsform der Erfindung kann das Gemisch der beiden Acrylsäurepolymerisate aus zwei verschiedenen Copolymerisaten bestehen.

In einer bevorzugten Ausführungsform der Erfindung können die Acrylsäurepolymerisate eine Viskositätszahl von 15 bis 60, insbesondere zwischen 20 und 35 und von 80 bis 200, insbesondere zwischen 90 und 120 aufweisen.

Bei den erfindungsgemäß eingesetzten Acrylsäurepolymerisaten handelt es sich um Homopolymerisate der Acrylsäure oder um Copolymerisate der Acrylsäure mit einem Gehalt von mindestens 50 Mol-%

3

Acrylsäure. Die Copolymerisate können als weitere Monomere andere etzylenisch ungesättigte Mono-oder Dicarbonsäuren mit 3 - 8 C-Atomen enthalten wie z. B. Methacrylsäure, Itaconsäure oder Maleinsäure bzw. deren Anhydrid. Von diesen carboxylgruppenhaltigen Monomeren kann der Anteil im Copolymeren bis zu 50 % betragen. Außerdem können die Copolymerisate carboxylgruppenfreie ethylenisch ungesättigte Monomere bis zu einem Anteil von 20 Mol-% enthalten.

Im einzelnen werden als carboxylgruppenfreie Monomere beispielsweise genannt Acrylamid, Methacrylamid 2-Acrylamido-2-methylpropansulfonsäure, Vinylsulfonsäure, Allylsulfonsäure, Vinylphosphonsäure, Allylphosphonsäure, Vinylacetat Vinylpropionat, Ester der Acrylsäure oder der Methacrylsäure mit 1 - 8 C-Atomen im Alkoholrest, wie Methylmethacrylat, Ethylmethacrylat, Butylmethacrylat, Methylacrylat, Ethylacrylat, Butylacrylat, Ethylhexylacrylat, Hydroxyethyl(meth)acrylat, Hydroxypropyl(meth)acrylat, Dialkylaminoethyl(meth)acrylat, Vinylglycol, Allylalkohol, Ethylen, Propylen, iso-Butylen, Methyl-vinylether, Ethyl-vinyletzer, Isobutylvinylether, Styrol oder Butadien.

Die entstehenden Polymerisate können sowohl als Säure als auch als Salz bzw. als teilneutralisierte Substanz verwendet werden; als Gegenionen eignen sich Metallionen sowie stickstoffhaltige Kationen.

Die Acrylsäurepolymerisate werden nach bekannten Verfahren hergestellt.

Derartige Verfahren sind zum Beispiel in "Acrylic acid polymers", M.L. Mitter in Encyclopedia of polymer science and technology, Vol. 1 Interscience Publishers, New York 1964 beschrieben.

Die Herstellung der Homo-bzw. Copolymere kann durch alle üblichen radikalischen Polymerisationsverfahren geschehen. Beispielsweise werden als Herstellmethoden genannt:

Lösungspolymerisation, wobei die Monomeren in Wasser oder in anderem Lösungsmittel oder Lösungsmittelgemisch mit eventuellen Zusätzen von niedermolekularen organischen und/oder anorganischen Verbindungen gelöst werden. Fällungspolymerisation in solchen Lösungsmitteln, in denen die Monomeren mindestens zum Teil löslich und die Polymerisate nicht löslich sind. Emulsionspolymerisation und Suspensionspolymerisation in solchen Lösungsmitteln, in denen die Monomeren nicht löslich sind und die Emulsionen bzw. Suspensionen durch Zusatz von nieder-und/oder hochmolekularen Substanzen stabilisiert werden.

Die Monomerkonzentration bewegt sich zwischen 5 % und 70 %, wobei je nach Viskosität der entstehenden Polymerlösung 25 % bis 50 % bevorzugt wird.

Als Initiatoren sind sowohl thermisch zersetzbare Radikalspender, die eine ausreichende Löslichkeit in dem gewünschten Lösungsmittel bzw. in dem Monomeren besitzen, als auch mehr-komponentige Redoxinitiatoren geeignet.

Auch eine durch Strahlen induzierte Polymerisation kann zur Herstellung der Acrylsäurepolymerisate verwendet werden.

Die Polymerisationstemperatur wird zusammen mit der Initiatormenge benutzt, um das Molekulargewicht des gewünschten Polymerisats zu steuern. Sie liegt zwischen 30 °C und 180 °C, wobei es von Vorteil ist, sie zwischen 60 °C und 120 °C zu halten. Niedrige Temperaturen bringen meistens zu hochmolekulare Polymerisate, zu hohe Temperaturen können Polymerabbau und Färbung verursachen.

Das Molekulargewicht kann auch durch geeignete Regler wie Thioderivate und niedermolekulare Alkohole gesteuert werden. Ein relatives Maß für das mittlere Molekulargewicht ist die Viskositätszahl (ml/g).

Die erfindungsgemäße Polymermischung beinhaltet mindestens ein Homo-bzw. Copolymer (a) mit Viskositätszahl (VZ) zwischen 15 und 60, bevorzugt zwischen 20 und 35, und ein Homo-bzw. Copolymer (b) mit VZ zwischen 80 und 200, bevorzugt zwischen 90 und 120. Das Verhältnis a/b variiert zwischen 1/99 und 99/1, bevorzugt zwischen 25/75 und 75/25. Das erfindungsgemäße Präparat kann sowohl durch Mischen der getrennt hergestellten Polymerisate als auch in einem einzigen synthetischen Schritt hergestellt werden, wobei durch Steuerung der Dosierzeit der verschiedenen Komponenten, der Reaktionstemperatur sowie der Reaktionsdauer die Polymeren mit unterschiedlichem Molekulargewicht bzw. unterschiedlicher Viskosität zeitlich nacheinander entstehen.

Die Polymermischung bzw. die in einem Schritt hergestellten Polymeren weisen die gleichen physikochemischen und anwendungstechnischen Eigenschaften auf.

Die Viskositätszahl ist eine bekannte Größe. Ihre Bestimmung wird beschrieben in der Prüfvorschrift DIN 53727.

In Anlehnung an die bekannte DIN Vorschrift wird die Viskositätszahl der erfindungsgemäß eingesetzten verschiedenen Acrylsäurepolymerisate wie folgt durchgeführt:

I. Methode

Aus wässriger Polycarbonsäure-Na-Salz-Lösung wird (unter Berücksichtigung des Feststoffgehaltes und bei Polycarbonsäuren nach Einwaagekorrektur auf Polycarbonsäure-Na-Salz (Ermittlung der Säurezahl eine wässrige Lösung (2 g Polymerisat in 100 cm³ 0,1 M an NaBr pH = 10,0) hergestellt. Die Viskositätszahl dieser Lösung wird in einem Ubbelohde Viskosimeter Kapillare Oa bei 25 °C ermittelt.

II. Geräte
Viscotimer     (Schott)
Meßstativ     (Schott)
Viscotimergestell aus V4A-Stahl
Ubbelohde Viscosimeter Kapillare Oa
Lauda Durchsichtthermostat D40-SN
Auswertung kann mit dem HP 97 S Rechner durchgeführt werden Rechenprogramm

Die Viskositätszahl (ml/g) ist ein relatives Maß für das mittlere Molekulargewicht und für den mittleren Polymerisationsgrad.
Die Viskositätszahl

$$VZ \quad \left(\frac{cm^3}{g}\right)$$

ist die relative Viskositätsänderung geteilt durch die Konzentration

$$c \quad \left(\frac{g}{cm^3}\right)$$

der Lösung.

$$VZ = \left(\frac{\eta}{\eta_0} - 1\right) \cdot \frac{1}{c} ; \quad \left(\frac{cm^3}{g}\right)$$

Anstelle der dynamischen Viskosität der Polymersösung und der dynamischen Viskosität $_0$ des Lösungsmittels werden in der Praxis die Durchlaufzeiten t der Meßlösung und $t_0$ des Lösungsmittels zur Ermittlung der Viskositätszahl VZ herangezogen und nach folgenden Formeln berechnet:

$$(2) \quad VZ = \left(\frac{t}{t_0} - 1\right) \cdot \frac{1}{c} ; \quad (cm^3/g)$$

Die Konzentration c ist mit 2,0 g/100 cm³ vorgegeben, es handelt sich also um eine Einpunkt Messung. Demzufolge ist die VZ nur definiert, wenn Kapillare, Kapillarenkonstante, Konzentration, Lösungsmittel, Meßtemperatur angegeben werden.
Die gemessenen Auslaufzeiten müssen um $\Delta t$ nach Hagenbach korrigiert werden.

$$(3) \quad \Delta t = \frac{A}{t^2} ;$$

Hagenbach Korrektion

5

(4) $A = 5{,}595 \cdot k^{-1{,}625}$;

(5) $t\,korr = t - \Delta t$;

(6) $t_o\,korr = t_o - \Delta t_o$;

$$(7) \quad VZ = \left(\frac{t - \Delta t}{t_o - \Delta t_o} - 1\right) \cdot \frac{1}{c} ; \quad (cm^3/g)$$

$$(8) \quad VZ \left(\frac{t\,korr}{t_o\,korr} - 1\right) \cdot \frac{1}{c} ; \quad (cm^3/g)$$

Relative Viskosität:     $t/t_o$

Diese dimensionslose Zahl stellt das Verhältnis der Auslaufzeit der Polymerlösung (t korr) und des Lösungsmittels ($t_o$ korr) dar, und ist die Basis für die Berechnung von VZ.

$$(9) \quad eta\text{-}rel = \frac{t}{t_o} = \frac{t\,korr}{t_o\,korr}$$

Auch hier ist das Ergebnis von den Meßbedingungen abhängig. Allgemein soll eta-rel den Wert 2 nicht überschreiten, da ansonsten eine andere Polymerkonzentration oder eine andere Kapillare gewählt werden muß.

Aus der VZ kann die Grenzviskositätszahl und das mittlere Molekulargewicht M berechnet werden.

Berechnung der Grenzviskositätszahl

$$(10) \quad \eta = \frac{VZ}{1 + K_{SB} \cdot c \cdot VZ}$$

$$K_{SB} = 0{,}15 \text{ für PAS und POC}$$

$$c = \text{Meßkonzentration in } \frac{g}{cm^3}$$

Berechnung des mittleren Gewichtsmittel des Molekulargewichtes bei PAS bzw. POC HS

$$\eta = K \cdot M_w^a$$

$$\log M_w = \frac{\log \frac{\eta}{K}}{a}$$

$$PAS_{20}{}^o \quad K = 0{,}283$$
$$a = 0{,}755$$

Meßprinzip

Es handelt sich um eine Zeitmessung. Im Ubbelohde-Kapillar-Viskosimeter mit der Kapillare Oa und bei 25,0 °C wird die Durchlaufzeit $t_o$ des Lösungsmittels (0,1 M wässrige NaBr pH = 10,0) gemessen. Diese Zeitmessung auf 0,01 Sek. erfolgt mit dem Meßstativ AVS/ST, das mit 2 Lichtschranken ausgerüstet ist.

Im gleichen Viskosimeter wird die Durchlaufzeit t der Meß(Polymer)-Lösung bestimmt.

Die Meßlösung enthält 2,0 g (POC Feststoff auf OS berechnet) pro 100 cm³ in 0,1 M NaBr pH = 10,0.

6

Für diese beiden Durchlaufzeiten muß die Hagenbach-Korrektion ($\Delta$ t; Sek.) berechnet werden, um welche die Zeiten t und $t_o$ korrigiert werden müssen (gl. 3; 4). Aus den korrigierten Durchlaufzeiten Meßwert t korr und Blindwert $t_o$ korr und der Konzentration c (g/100 cm³) wird die Kenngröße für das mittlere Molekulargewicht

- Viskositätszahl = VZ (cm³/g);

berechnet (G1. 8).

Ausführung

Meßbedingungen
Kapillare Oa
Meßtemperatur 25 °C ± 0,01 °K
Lösungsmittel: 0,1 M NaBr wässrig pH = 10,0 ± 0,05
Polymer-Konzentration der Meßlösung: 2,000 ± 0,02 an
Polycarbonsäure
Na-Salz
Zeitmessung: auf 0,01 Sek. (Lichtschranke)
Anzahl der Messungen: 3 (3 Werte werden für das Rechnerprogramm benötigt)

Lösungsmittel:
50 ml
0,1 M NaBr pH = 10,0

Die Korrektur nach Hagenbach wird nicht durchgeführt

Einwaage der Polymer-Lösung

Bei der Einwaage für die Meßlösung für VZ muß
    1. der Feststoffgehalt
und
    2. die Art des Polymeren (ob das Polymer als
Säure = POC HS PAS
neutral = POC-AS
oder als
Na-Salz = POC-OS PAS-N
vorliegt) berücksichtigt werden.

Einwaage bei POC-HS und PAS-S

Der Feststoffgehalt der POC-HS bzw. PAS* ist nach AV 318.1 zu bestimmen.
Die Säurezahl der POC-HS bzw. PAS* ist nach AV 319.1 zu bestimmen.

*S

$$\text{Einwaage in g} = \frac{1{,}0000 \cdot \dfrac{100}{\% \text{ Feststoff}}}{1 + \dfrac{0{,}393 \cdot \text{SZ-F}}{100}}$$

für 50 ml
Meßlösung

0,393 = Korrekturfaktor, da Polycarbonsäure eingewogen wird, die Meßlösung aber 2 % an Polycarbonsäure-Na-Salz sein muß.

SZ-F = Säurezahl Feststoff in MgKOH/g bestimmt nach AV 319.1

Einwaage bei POC-OS und PAS-N
liegt schon als Polycarbonsäure-Na-Salz vor und wird nur auf Feststoff korrigiert. Gilt ebenfalls für Typ POC-AS!

$$\text{Einwaage in g:} \quad \frac{1{,}0000 \cdot 100}{\% \text{ Feststoff}}$$

für 50 ml
Meßlösung

Vorbereitung der Meßlösung

In ein 100 ml Becherglas werden B g POC-Lösung (Berechnung der genauen Einwaage bei POC-HS (PAS-S) nach 6.2.1
bei POC-AS nach 6.2.2
bei POC-OS (PAS-N) nach 6.2.2
eingewogen.
Nach Zugabe von ca. 20 ml dest. $H_2O$ und Zupipettieren von 5 ml 1 M NaBr-Lösung wird kalt unter Rühren gelöst. Mit dem Knick-Digital-pH-Meter (Elektrode EA 121) mißt man den pH-Wert (bei HS pH ca. 2 - 3, bei OS pH ca. 7 - 8), und stellt unter Rühren durch Zugabe von NaOH den pH-Wert von 10,0 ± 0,05 ein. 1 Stunde nach der letzten NaOH-Zugabe wird der pH-Wert nochmals kontrolliert und eventuell korrigiert.
Zur Einwaageberechnung Punkt 6.2.2 bei POC-OS, POC-AS bzw. PAS-N (also von Polycarbonsäure-Na-Salzen) gibt man im Programm-Schritt 7

SZ-F: 0 ein.

Die Viskositätszahl wird nach der Formel

$$VZ = \frac{1}{c} \cdot \left(\frac{t}{t_o} - 1\right) \frac{ml}{g}$$

berechnet

c = Konzentration der PAS-NA-Salz-Meßlösung in

$$\frac{g}{cm^3}$$

t = Durchlaufzeit der Polymerlösung
$t_o$ = Durchlaufzeit des Bindewertes
Die Grenzviskositätszahl $\eta$ wird nach folgender Formel berechnet:

$$\eta = \frac{VZ}{1 + K_{SB} \cdot c \cdot VZ}$$

$D_{SB}$ = Konstante für PAS und POC gleich 0,15.
$K_{SB}$ = 0,15
Das mittlere Gewichtsmittel des Molekulargewichtes läßt sich wie folgt berechnen:

$$= K \cdot M_w^a$$

$$\log M_w = \frac{\log \frac{\eta}{K}}{a}$$

Ihr Anteil der Komponente (c) an dem Adsorptionsmittel beträgt 3 bis 15 Gewichtsprozent und vorzugsweise 4 bis 12 Gewichtsprozent. Mit steigendem Anteil an Polysäure bzw. deren Walzen nimmt die Beständigkeit der Körner gegen Abrieb zu. Bei einem Anteil von 4 bis 5 Gewichtsprozent wird bereits eine hinreichende Abriebfestigkeit erzielt. Optimale Abriebeigenschaften weisen Gemische mit 8 bis 12 Gewichtsprozent Polysäure bzw. deren Salzen auf.

Der bei einer Trocknungstemperatur von 145 °C entfernbare Feuchtigkeitsgehalt beträgt 8 bis 18 Gewichtsprozent, vorzugsweise 10 bis 16 Gewichtsprozent. Weitere vom Zeolith gebundene Anteile an Wasser, die bei höheren Temperaturen frei werden, sind in diesem Betrag nicht enthalten.

Als fakultativen Bestandteil kann das Adsorptionsmittel nicht ionische Tenside in Anteilen bis zu 5 Gewichtsprozent, vorzugsweise 0,5 bis 4 Gewichtsprozent, enthalten. Geeignete nichtionische Tenside sind insbesondere Ethoxylierungsprodukte von linearen oder methylverzweigten (Oxo-Rest) Alkoholen mit 12 bis 18 Kohlenstoffatomen und 3 bis 10 Ethylenglykolethergruppen. Brauchbar sind ferner Ethoxylierungsprodukte von vicinalen Diolen, Aminen, Thioalkoholen und Fettsäureamiden, die hinsichtlich der Anzahl der C-Atome im hydrophoben Rest und der Glykolethergruppen den beschriebenen Fettalkoholetzoxylaten entsprechen. Weiterhin sind Alkylphenolpolyglykolether mit 5 bis 12 C-Atomen im Alkylrest und 3 bis 10 Ethylenglykolethergruppen brauchbar. Schließlich kommen auch Blockpolymere aus Ethylenoxid und Propylenoxid, die unter der Bezeichnung Pluronics® handelsüblich sind, in Betracht. Die nichtionischen Tenside sind üblicherweise dann anwesend, wenn bei der Herstellung der körnigen Adsorptionsmittel von wäßrigen Zeolith-Dispersionen ausgegangen wird, in denen die Tenside als Dispersionsstabilisatoren fungieren. In einzelnen Fällen können die nichtionischen Tenside auch ganz oder teilweise durch andere Dispersionsstabilisatoren ersetzt sein, wie sie in DE 25 27 388 beschrieben sind.

Die mittlere Korngröße des Adsorptionsmittels beträgt 0,2 bis 1,2 mm, wobei der Anteil der Körner unterhalb 0,05 mm nicht mehr als 2 Gewichtsprozent und oberhalb 2 mm nicht mehr als 5 Gewichtsprozent beträgt. Vorzugsweise weisen mindestens 80 Gewichtsprozent, insbesondere mindestens 90 Gewichtsprozent der Körner eine Größe von 0,1 bis 1,2 mm auf, wobei der Anteil der Körner zwischen 0,1 und 0,05 mm nicht mehr als 10 Gewichtsprozent, insbesondere nicht mehr als 5 Gewichtsprozent, und der Anteil der Körner zwischen 1,2 und 2 mm ebenfalls nicht mehr als 10 Gewichtsprozent, insbesondere nicht mehr als 5 Gewichtsprozent beträgt.

Das Schüttgewicht des Adsorptionsmittels beträgt 400 bis 700 g/l, vorzugsweise 500 bis 650 g/l.

Das Mittel besteht im wesentlichen aus abgerundeten Körnern, die ein sehr gutes Rieselverhalten aufweisen. Dieses sehr gute Rieselverhalten ist auch dann noch gegeben, wenn die Körner mit großen Anteilen, die bis zu 40 Gewichtsprozent, bezogen auf das Adsorbat, betragen können, an flüssigen bzw. halbflüssigen Waschmittelbestandteilen, insbesondere an nichtionischen Tensiden, imprägniert sind. Hinsichtlich dieser Eigenschaften sind sie den bisher bekannt gewordenen, für Wasch-und Reinigungsmittel als brauchbar vorgeschlagenen Trägerkornmaterialien überlegen.

Gegenstand der Erfindung ist ferner ein Verfahren zur Herstellung des erfindungsgemäßen körnigen Adsorptionsmittels. Dieses Verfahren ist dadurch gekennzeichnet, daß man einen wäßrigen Ansatz der Bestandteile (a) bis (c) sowie gegebenenfalls (e), der 50 bis 65 Gewichtsprozent Wasser enthält, mittels Düsen in einen Fallraum versprüht und mittels Trocknungsgasen, die eine Eingangstemperatur von 150 bis 280 °C und eine Austrittstemperatur von 50 bis 120 °C aufweisen, auf einen bei 145 °C entfernbaren Feuchtigkeitsgehalt von 8 bis 18 Gewichtsprozent trocknet.

Vorzugsweise beträgt der Wassergehalt des wäßrigen Ansatzes 55 bis 62 Gewichtsprozent. Seine Temperatur beträgt zweckmäßigerweise 50 bis 100 °C und seine Viskosität 5 000 bis 20 000 mPa·s. Der Zerstäubungsdruck liegt meist bei 20 bis 120 bar, vorzugsweise 30 bis 80 bar. Zweckmäßigerweise verwendet man Zweistoffdüsen, in die außer dem zu versprühenden Ansatz auch Druckluft eingeführt werden kann. Das Trocknungsgas, das im allgemeinen durch Verbrennen von Heizgas oder Heizöl erhalten wird, vorzugsweise im Gegenstrom geführt. Bei Verwendung sogenannter Trockentürme, in welche der wäßrige Ansatz im oberen Teil über mehrere Hochdruckdüsen eingesprüht wird, beträgt die Eingangstemperatur, gemessen im Ringkanal (d. h., unmittelbar vor Eintritt in den unteren Teil des Turmes) 150 bis 280 °C, vorzugsweise 180 bsi 250 °C und insbesondere 190 bis 230 °C. Das den Turm verlassende, mit Feuchtigkeit beladene Abgas weist üblicherweise eine Temperatur von 50 bis 120 °C, vorzugsweise 55 bis 105 °C auf.

Sofern das Adsorptionsmittel mit nichtionischen Tensiden imprägniert werden soll, können diese sowohl auf das noch warme als auch auf das bereits abgekühlte bzw. nach dem Abkühen wieder erwärmte Sprühprodukt aufgesprüht werden. Die Abriebfestigkeit und Formkonstanz der Körner ist bei Einhaltung der angegebenen Mengenverhältnisse bzw. Herstellungsbedingungen so hoch, daß auch die frisch zubereiteten, insbesondere aber die abgekühlten und gegebenenfalls wieder erwärmten, ausgereiften Körner unter den üblichen Sprühmischbedingungen mit den flüssigen Zusatzstoffen behandelt, gemischt und gefördert werden können, ohne daß es zur Bildung von Feinteiligen oder gröberen Agglomeraten kommt.

Nach dem Aufbringen des flüssigen Zusatzstoffes können die Körner gegebenenfalls noch mit feinteiligen Pulvern bestäubt bzw. oberflächlich beschichtet werden. Hierdurch kann die Rieselfähigkeit noch weiter verbessert und das Schüttgewicht geringfügig erhöht werden. Geeignete Puderungsmittel weisen eine Korngröße von 0,001 bis höchstens 0,1 mm, vorzugsweise von weniger als 0,05 mm auf und können in Anteilen von 0,03 bis 3, vorzugsweise 0,05 bis 2 Gewichtsörozent, bezogen auf das mit Zusatzstoff beladene Adsorptionsmittel angewendet werden. In Frage kommen z. B. feinpulvrige Zeolithe, Kieselsäureaerogel (Aerosil®), farblose oder farbige Pigmente, wie Titandioxid sowie andere, bereits zum Pudern von Körnern bzw. Waschmittelteilchen vorgeschlagene Pulvermaterialien, wie feinpulvriges Natriumtripolyphosphat, Natriumsulfat, Magnesiumsilikat und Carboxymethylcellulose.

Man kann die körnigen Adsorptionsmittel nach dem Aufbringen der Zusatzstoffe auch mit einem Film aus wasserlöslichen Polymeren überziehen. Brauchbare Überzugsmittel sind z. B. wasserlösliche Celluloseether bzw. die als Bestandteil (b) genannten Polymeren sowie Polyvinylalkohol, Polyvinylpyrrolidon und Polyacrylamid.

Die zu adsorbierenden Zusatzstoffe können aus bekannten nichtionischen Tensiden bestehen, wie sie üblicherweise in Wasch-und Reinigungsmitteln verwendet werden. Weitere geeignete Zusatzstoffe sind organische Lösungsmittel, mit denen das Reinigungsvermögen von Wasch-und Reinigungsmitteln insbesondere gegenüber fettigen Verschmutzungen verbessert wird und die auf diese Weise einem körnigen Reinigungsmittel problemlos einverleibt werden können. Aber auch empfindliche Stoffe, wie Enzyme, Biocide, Duftstoffe, Bleichaktivatoren, Avivagemittel, optische Aufheller sowie anionische oder kationische Tenside können nach vorherigem Lösen bzw. Dispergieren in organischen Lösungsmitteln bzw. den flüssigen oder gemschmolzenen nichtionischen Tensiden den Adsorptionsmitteln zugemischt werden. Diese Stoffe dringen zusammen mit dem Lösungs-bzw. Dispergiermittel in das poröse Korn ein und sind auf diese Weise gegen Wechselwirkungen mit anderen Pulverbestandteilen geschützt.

Statt durch Sprühtrocknung können die erfindungsgemäßen Adsorptionsmittel auch durch Aufbaugranulierung hergestellt werden, beispielsweise indem man den pulverförmigen Zeolith (a), eine wäßrige Lösung des Natriumsilikats (b) sowie eine wäßrige Lösung der polymeren Carbonsäure (c) bzw. deren Salz in ein Wirbelbett einbringt und darin granuliert und trocknet. Diese Aufbaugranulierung kann sowohl kontinuierlich wie chargenweise durchgeführt werden.

Der erfindungsgemäße Waschmittelbuilder weist die folgenden Vorteile auf:

Sehr gutes Calciumbindevermögen

Sehr gute Antiredispositionswirkung

Sehr gute Inhibierung von Heizstabinkrustationen

Sehr gute Inhibierung von Gewebeinkrustationen

Während der erfindungsgemäße phosphatfreie Waschmittelbuilder, ausgeglichen in allen vier Punkten, ausgezeichnete Vorteile zeigt, sind die bekannten Waschmittelbuilder nur unausgeglichen in einzelnen Punkten von Vorteil.

Beispiele:

a) Bestimmung der Viskositätszahl (VZ)

Die VZ wird mittels eines Ubbelohde-Kapillarviskosimeters mit Kapillare Oa bei 25 ° gemessen. Gemessen wird die Durchlaufzeit einer 2 %igen (Gewicht) Polymerlösung in 0,1 Molar NaBr bei pH 10. Der pH-Wert wird durch Zugabe von NAOH eingestellt. Als VZ bezeichnet man die Differenz zwischen der Durchlaufzeit, der Probe und der des reinen Lösungsmittels, geteilt durch die Polymerkonzentration der gemessenen Probe.

b) Beispiele zur Herstellung der Polymeren

Die im folgenden Angegebenen Teile verstehen sich wie Gewichtsteile. Der Reaktor ist thermostatisierbar, ausgelegt für einen Druck bis 10 bar, versehen mit Rührer und mit Zuleitungen für die verschiedenen Komponenten.

Beispiel 1

250 Teile entionisiertes Wasser werden mit 2,6 Teilen 50 %iges $H_2O_2$ vorgelegt und auf 90 °C gebracht. Voneinander getrennt werden 415 Teile Acrylsäure und 11 Teile in 720 Teile entionisiertem Wasser gelöstes Natriumperoxodisulfat 2 Stunden lang bei 90 °C zudosiert. Es folgt 1,5 Stunden Nachreaktionszeit bei gleicher Temperatur. Es entsteht ein Polymer mit VZ = 100 cm$^3$/g.

Beispiel 2

185 Teile entionisiertes Wasser werden vorgelegt und auf 100 °C gebracht. Bei konstant bleibender Temperatur werden 2 Stunden lang 200 Teile Acrylsäure und 16,7 Teile in 100 Teilen entionisierten Wassers gelöstes Natriumperoxodisulfat voneinander getrennt zugeleitet. Es folgt 1 Stunde Nachreaktion bei 100 °C. Es entsteht ein Polymer mit VZ = 24 cm$^3$/g.

Beispiel 3

80 Teile entionisiertes Wasser werden vorgelegt. Unter Stickstoffatmosphäre wird ein Druck von 3,5 bar eingestellt und der Reaktorinhalt auf 135 °C geheizt. Unter diesen Bedingungen werden 60 Teile entionisiertes Wasser, 19 Teile 50 %iges $H_2O_2$ und 80 Teile Acrylsäure innerhalb von 4 Stunden durch getrennte Leitungen zugesetzt. Es folgen 2 Stunden Nachreaktion, während der die Temperatur bis auf 90 °C sinkt. Es entsteht ein Polymer mit VZ = 14 cm$^3$/g.

11

c) Prüfung des erfindungsgemäßen Washchmittelbuilders in Waschmitteln

Die Waschmit werden auf einem Telschig-Sprühnebelmischer hergestellt. Die Tenside werden zusammen mit dem opt. Aufheller heiß versprüht. Anschließend wird mit Sikalon D, Enzym, Behenseife, Talgseife und Talgalkohol abgepudert.

Rezepturen siehe Tabelle 1.

Die Waschversuche werden auf 3 Mielewaschmaschinen, W 763, im zyklischen Wechsel bei einer Wasserhärte von ca. 20 °dH und einer Waschtemperatur von 60 °C im Koch-/Buntprogramm über 25 Wäschen durchgeführt.

Das Balastgewebe besteht aus 3 kg Frottee-und Baumwollgewebe.

Pro Waschgang werden je 150 g Waschpulver für Vor-und Hauptwäsche dosiert.

Als Waschtestgewebe werden weiße Handtücher (vorher 2 x bei 95 °C vorgewaschen) mit aufgenähten Anschmutzungen (ca. 22 x 15 cm) eingesetzt. Auf jedes Handtuch werden zwei Anschmutzungen wechselseitig genäht.

Folgende Anschmutzungen wurden benutzt:

EMPA-Standard 2) WFK -Tee 1) WFK -Hautfett 1) EMPA-Rotwein 2) EMPA-Schwefelschwarz 2)

Zur Aufhärtung der Flotte wird zu jedem zweiten Waschgang je ein ca. 22 x 15 cm großer Streifen mit folgenden Anschmutzungen gegeben:

EMPA - Standard
EMPA - Blut
EMPA - Tee
EMPA - Schwefelschwarz

Es werden je 2 1/2 Handtücher (ca. 550 g) mit den Anschmutzungen für ein Waschmittel eingesetzt und nach der ersten Wäsche farbmetrisch abgemustert. Das Primärwaschvermögen wird über je eine Wäsche pro Maschine - insgesamt 3 Primärwäschen - ermittelt.

Zur Bestimmung des Sekundärwaschvermögens wird für jedes Waschmittel ein Streifen Baumwoll-und Frottéegewebe mitgewaschen und nach 25 Wäschen die Inkrustationswerte bestimmt.

Frottée und Baumwolle :     1 h bei 1000 °C verascht
Handtuch :     2 h bei 1000 °C verascht

Der Grad der Vergrauung wurde an Baumwolle mit grünen Streifen (WFK) nach der 10. und 25. Wäsche gemessen.

Die farbmetrische Abmusterung erfolgt auf dem Filterfarbmeßgerät RFC 3 (Zeiss). Zur Bewertung wird der Weißgrad nach Berger herangezogen.

Die Auswertung erfolgt unter statistischen Gesichtspunkten. Um den Meßaufwand in vernünftigen Grenzen zu halten (Meßfläche: 3 cm Ø, Meßdauer: ca 2' pro Meßpunkt) werden folgende Meßpunkte genommen.

Primärwäsche:     je Anschmutzung 3 Punkte, bei 3 Wiederholungen, also insgesamt 9 Punkte.

1) WFK  =  Wäschereiforschung     Krefeld   (Deutschland)

2) EMPA  =  Eidgenössische     Materialprüfungsanstalt,     St. Gallen   (Schweiz)

Vergrauung: je 3 Meßpunkte

Nach Prüfung auf Ausreißer (1) werden Mittelwerte $\bar{x}_i$ und Standardabweichung $S_i$ bestimimt (2) . Signifikante Unterschiede werden durch Ermittlung des LSD-Wertes (least significant differenz) (3) festgestellt:

a) gleicher Stichprobenumfang $n_i$ = konst.

$$LSD = \sqrt{\frac{2}{n_i} \cdot s_{in}^2 \cdot F_{1, n-k; \alpha}}$$

b) ungleiche Stichprobenumfänge $n_i \neq$ konst.

$$LSD_{(a,b)} = \sqrt{\frac{n_a + n_b}{n_a \cdot n_b} \cdot s_{in}^2 \cdot F_{1; n-k; \alpha}}$$

$$n = \sum_{i=1}^{k} n_i \quad \text{(Summe aller Meßwerte)}$$

k = Anzahl der Gruppen (hier: 8)

$F_{l; n-k; \alpha}$ = Tabellenwert zum sog. "F-Test" (Anwendung: Varianzanalyse etc.); hier angewandt auf dem 5 %-Fehlerniveau ( $\alpha$ = 0,05) $s_{in}^2$ bezeichnet man als "Varianz innterhalb der Gruppe" (Mittelwert der quadrierten Abweichungen der Einzelwerte um die Gruppenmittelwerte) und wird nach folgender Formel aus den Einzelstandardabweichungen $s_i$ der Gruppe berechnet (4) .

$$s_{in}^2 = \sum_i \frac{(s_i^2 (n_i - 1))}{n-k}$$

Die Mittelwerte $\bar{x}_i$ werden nach absteigender Größe geordnet und die Mittelwertsdifferenzen anhand des LSD-Kriteriums auf Signifikanz geprüft. Nicht-signifikante Unterschiede werden durch Unterstreichung der Mittelwerte mit einer gemeinsamen Linie kenntlich gemacht.

Zur Gesamtbeurteilung des Primärwaschvermögens wird der Test nach Wilcoxon-Wilcox (multiple Mittelwertsvergleiche anhand von Rangzahlen) (5) durchgeführt. Für jede Anschmutzung wird bezüglich der 8 Rezepturen eine Rangordnung von 1-8 (gleiche Mittelwerte erhalten eine "mittlere" Rangzahl) aufgestellt und die Einzelränge für jede Rezeptur addiert. Die Differenzer dieser Rangsummen werden durch Vergleich mit tabellierten Werten (5 %-Niveau) auf Signifikanz hin untersucht.

(1) Lothar Sachs, Angewandte Statistik, 4. Auflage, Springer-Verlag, 1973, S. 219-221

(2) ibid, S. 57, 58

(3) ibid, S. 394; Tabellen auf S. 116-124

(4) ibid., S. 63, 386-389

(5) ibid., S. 426-429

13

Im Primärwaschvermögen (Tabelle 2 und 3) und bis auf die Rezepturen 4 und 7 mit der PAS VZ = 9 keine Unterschiede feststellbar. Dies ist ein Hinweis auf die bekannte Tatsache, daß die Hauptwirkung der PAS bzw. der Polymere allgemein schwerpunktmäßig in der Verbesserung der Waschmittel, hinsichtlich des Sekundärwaschvermögens liegt.

In der Vergrauung (Tabelle 4) zeigt sich eine deutliche Abstufung im Wirkungsspektrum der PAS. Überraschenderweise stellt man fest, daß sich mit Polymermischungen signifikant bessere Weißgrade erzielen lassen als mit den einzelnen PAS, vor allem gegenüber den beiden handelsüblichen Produkten (Rezepturen 1 und 8). Dieses Verhalten weist eindeutig auf synergische Effekte hin, die nur bei den Mischungen wirksam werden.

Dieses Verhalten spiegelt sich ebenfalls in den Differenzen zwischen der 10. und der 25. Wäsche wieder. Mischungen aus PAS weisen eine deutliche Zurücknahme des Weißgrades auf, die einzelnen PAS dagegen eine leichte Abnahme.

Der angesprochene Synergismus wirkt sich in ausgeprägter Form bei den Inkrustationswerten aus. Vor allem die erfindungsgemäße Mischung der Rezeptur 6 aus 50 Teilen PAS VZ = 100 (Beispiel 1) und 50 Teilen PAS VZ = 24 (Beispiel 2) führt besonders an dicht gewebtem Baumwollgewebe zu einer signifikanten Absenkung der Inkrustationswerte. Unerwartet hoch sind die Werte mit der PAS VZ = 9 (siehe Rezeptur 4 und 7). Dies deutet auf eine untere Grenze für den optimalen VZ-Bereich für die 85 niedermolekulare PAS-Komponente in PAS-Mischungen hin.

Tabelle 1

Rezepturen der Testwaschmittel 1 - 8 (Angaben in Prozent)

Aklylbenzolsulfonat 3,5
Alkylsulfat, $C_{16}/C_{18}$ 3,5
Na-Toluolsulfonat 0,8
Talgalkohol 5 EO 2,0
Oxoalkohol 9 EO, $C_{13}/C_{15}$ 2,0
Talgseife 2,0
Behenseife 2,0
Talgalkohol 0,5
Zeolith A 26,3
Polymer*) 2,0
Na-Disilikat 6,0
Na-Perborattetrahydrat 19,0
CMC 1,5
EDTA 0,2
ENZYM (Protease) 0,2
Opt. Aufheller 0,2
Na-Sulfat 10,5
Wasser 9,2

*) Polymer

Nr. 1: PAS aus Beispiel 1, VZ = 100, Handelsprodukt
Nr. 2: PAS, VZ = 60
Nr. 3: PAS aus Beispiel 2, VZ = 24
Nr. 4: PAS, VZ = 9
Nr. 5: Mischung aus 50 Teilen PAS VZ = 100 und 50 Teilen PAS VZ = 60
Nr. 6 Mischung aus 50 Teilen PAS VZ = 100 und 50 Teilen PAS VZ = 24
Nr. 7: Mischung aus 50 Teilen PAS VZ = 100 und 50 Teilen PAS VZ = 9
Nr. 8: Handelsübliches Acrylsäure/Maleinsäure-Copolymerisat, VZ = 44

Tabelle 2

Primärwaschvermögen

Weißgrad nach Berger, $\Delta$ -Werte

| Rezeptur / Anschmutzung | 1 $\bar{x}_1 \pm S_1$ | 2 $\bar{x}_2 \pm S_2$ | 3 $\bar{x}_3 \pm S_3$ | 4 $\bar{x}_4 \pm S_4$ | 5 $\bar{x}_5 \pm S_5$ | 6 $\bar{x}_6 \pm S_6$ | 7 $\bar{x}_7 \pm S_7$ | 8 $\bar{x}_8 \pm S_8$ | $S_{iN}^2$ LSD |
|---|---|---|---|---|---|---|---|---|---|
| EMPA-Standard | 53,2 5,36 | 45,8 4,46 | 51,4 3,05 | 29,3 3,34 | 46,3 4,77 | 43,4 5,48 | 27,2 6,69 | 49,9 6,70 | 30,28 5,18 |
| WFK-Tee | 115,0 3,03 | 112,8 1,18 | 120,3 5,91 | 78,1 8,46 | 99,6 8,51 | 101,2 8,14 | 78,5 7,41 | 94,4 4,72 | 41,62 6,07 |
| WFK-Hautfett | 89,4 2,35 | 79,5 5,75 | 86,0 2,98 | 67,9 4,57 | 90,1 7,38 | 91,7 6,80 | 53,2 4,14 | 95,9 4,95 | 26,34 4,83 |
| EMPA-Rotwein | 76,1 3,80 | 72,7 5,22 | 81,1 5,02 | 63,2 8,83 | 72,8 5,70 | 72,9 9,42 | 63,4 12,27 | 68,2 3,31 | 53,45 6,88 |
| EMPA-Schwefels. | 11,8 1,18 | 12,4 2,25 | 12,9 0,81 | 11,0 1,62 | 13,1 1,66 | 10,2 1,16 | 8,6 1,93 | 10,6 1,01 | 2,32 1,44 |

$n_i = 9$, $n = 72$, $k = 8$, $n-k = 64$, $F_1$; 64; 0,05 = 3,99

Rangfolge nach LSD

| | |
|---|---|
| EMPA-Standard | 1-3-8-5-2-6-4-7 |
| WFK-Tee | 3-1-2-6-5-8-7-4 |
| WFK-Hautfett | 8-6-5-1-3-2-4-7 |
| EMPA-Rotwein | 3-1-6-5-2-8-7-4 |
| EMPA-Schwefels. | 5-3-2-1-4-8-6-7 |

0 289 767

Tabelle 3

Gesamtergebnis des Primärwaschvermögens

(Test nach Wilcoxon-Wilcox)

| Rezeptur Anschmutzung | 1 | 2 | 3 | 4 | 5 | 6 | 7 | 8 |
|---|---|---|---|---|---|---|---|---|
| EMPA-Standard | 1 | 5 | 2 | 7 | 4 | 6 | 8 | 3 |
| WFK-Tee | 2 | 3 | 1 | 8 | 5 | 4 | 7 | 6 |
| WFK-Hautfett | 4 | 6 | 5 | 7 | 3 | 2 | 8 | 1 |
| EMPA-Rotwein | 2 | 5 | 1 | 8 | 4 | 3 | 7 | 6 |
| EMPA-Schwefels. | 4 | 3 | 2 | 5 | 1 | 7 | 8 | 6 |
| Rangsumme | 13 | 22 | 11 | 35 | 17 | 22 | 38 | 22 |

| Differenz D | 1 | 5 | 2/6/8 | 4 | 7 |
|---|---|---|---|---|---|
| 3 | 2 | 6 | 11 | 24 | 27 |
| 1 | | 4 | 9 | 22 | 25 |
| 5 | | | 5 | 18 | 21 |
| 2/6/8 | | | | 13 | 16 |
| 4 | | | | | 3 |

Die unterstrichenen Werte sind größer als der Tafelwert $D_{n=s; k=8; \alpha=0,05} = 23,5$, damit Bedingung der Signifikanz erfüllt.

Rangfolge

3-1-5-2/6/8-4-7

0 289 767

**Tabelle 4**

Vergrauung

Weißgrad nach Berger, $\Delta$ -Werte

| | $\overline{x}_1 \pm S_1$ | $\overline{x}_2 \pm S_2$ | $\overline{x}_3 \pm S_3$ | $\overline{x}_4 \pm S_4$ | $\overline{x}_5 \pm S_5$ | $\overline{x}_6 \pm S_6$ | $\overline{x}_7 \pm S_7$ | $\overline{x}_8 \pm S_8$ | $S^2_{iN}$ | LSD |
|---|---|---|---|---|---|---|---|---|---|---|
| Baumwolle | | | | | | | | | | |
| 10. Wäsche | 25,2 0,36 | 25,6 0,12 | 26,5 0,06 | 20,7 0,18 | 24,2 0,36 | 24,9 0,10 | 21,8 0,16 | 26,3 0,00 | 0,043 | 0,36 |
| 25. Wäsche | 25,1 0,40 | 25,2 0,32 | 24,8 0,15 | 25,0 0,63 | 27,3 0,12 | 28,0 0,15 | 26,4 0,32 | 25,9 0,25 | 0,11 | 0,57 |
| Differenz*) 10./25. Wäsche | − 0,4 % | − 1,6 % | − 6,9 % | + 17,2 % | + 11,3 % | + 11,1 % | + 17,4 % | − 1,5 % | | |

*) Die Differenz bezieht sich auf den 25. Wäsche-Wert

Rangfolge

25. Wäsche      6-5-7-8-2-1-4-3

Tabelle 5

Inkrustation

(Glühverlust in Prozent)

|  | 1 | 2 | 3 | 4 | 5 | 6 | 7 | 8 |
|---|---|---|---|---|---|---|---|---|
| **Baumwolle** | | | | | | | | |
| 10. Wäsche | 2,5 | 2,3 | 2,3 | 3,1 | 2,4 | 1,5 | 3,6 | 2,4 |
| 25. Wäsche | 3,8 | 4,2 | 4,4 | 6,8 | 3,8 | 2,7 | 6,6 | 4,0 |
| **Frottée** | | | | | | | | |
| 10. Wäsche | 1,7 | 1,7 | 1,7 | 1,7 | 1,7 | 1,3 | 1,9 | 1,7 |
| 25. Wäsche | 4,0 | 4,3 | 4,3 | 4,3 | 3,8 | 3,5 | 4,4 | 4,3 |

## Ansprüche

1. Körniges Adsorptionsmittel mit hohem Aufnahmevermögen für flüssige bis pastöse Wasch-und Reinigungsmittelbestandteile, gekennzeichnet durch die folgenden Komponenten:

(a) 60 bis 80 Gewichtsprozent eines zum Kationenaustausch befähigten, synthetischen, gebundenes Wasser enthaltenden Natriumsilikats,

(b) 0,1 bis 8 Gewichtsprozent Natriumsilikat der Zusammensetzung $Na_2O\ SiO_2 = 1 : 2$ bis $1 : 3,5$,

(c) 3 bis 15 Gewichtsprozent eines verschiedener Acrylsäurepolymerisate, die eine unterschiedliche Viskositätszahl aufweisen,

(d) 8 bis 18 Gewichtsprozent bei einer Trocknungstemperatur von 145 °C entfernbares Wasser,

(e) 0 bis 5 Gewichtsprozent eines nichtionischen, Polyglykolethergruppen aufweisenden Tensids, wobei das Adsorptionsmittel eine mittlere Korngröße von 0,2 bis 1,2 mm aufweist und der Anteil mit einer Korngröße von weniger als 0,05 mm nicht mehr als 2 Gewichtsprozent und der Anteil mit einer Korngröße von mehr als 2 mm nicht mehr als 5 Gewichtsprozent beträgt und das Schüttgewicht 400 bis 700 g/l beträgt.

2. Körniges Adsorptionsmittel nach Anspruch 1, gekennzeichnet durch die Bestandteile

65 bis 75      Gewichtsprozent der Komponente (a)
0,5 bis 5      Gewichtsprozent der Komponente (b)
4 bis 12      Gewichtsprozent der Komponente (c)
10 bis 16      Gewichtsprozent der Komponente (d)
0,5 bis 4      Gewichtsprozent der Komponente (e)

3. Körniges Adsorptionsmittel nach Anspruch 1 und 2, dadurch gekennzeichnet, daß mindestens 80 Gewichtsprozent, insbesondere mindestens 90 Gewichtsprozent der Körner eine Größe von 0,1 bis 1,2 mm aufweisen, wobei der Anteil der Körner von 0,1 bis 0,05 mm sowie von 1,2 bis 2 mm jeweils nicht mehr als 10 Gewichtsprozent, insbesondere nicht mehr als 5 Gewichtsprozent beträgt.

4. Körniges Adsorptionsmittel nach Anspruch 1 und 2, dadurch gekennzeichnet, daß dessen Schüttgewicht 500 bis 650 g/l beträgt.

5. Körniges Adsorptionsmittel nach Anspruch 1 bis 4, worin der Anteil der Komponente (b) 1 bis 3 Gewichtsprozent beträgt.

6. Körniges Adsorptionsmittel nach Anspruch 1 bis 4, worin die Komponente (c) das Gemisch der Acrylsäurepolymerisate aus zwei Homopolymeren ist.

7. Körniges Adsorptionsmittel nach Anspruch 1 bis 5, worin die Komponente (c) das Gemisch der Acrylsäurepolymerisate aus einem Homopolymerisat und einem Copolymerisat ist.

8. Körniges Adsorptionsmittel nach Anspruch 1 bis 4, worin die Acrylsäurepolymerisate der Komponente (c) eine Viskositätszahl von 15 bis 60 und von 80 bis 200 aufweisen.

9. Verfahren zur Herstellung eines körnigen Adsorptionsmittels mit hohem Aufnahmevermögen für flüssige bis pastöse Wasch-und Reinigungsmittelbestandteile, dadurch gekennzeichnet, daß man einen wäßrigen Ansatz der Bestandteile (a) bis (c) sowie gegebenenfalls (e), der 50 bis 65 Gewichtsprozent Wasser enthält, mittels Düsen in einen Fallraum versprüht und mittels Trocknungsgasen, die eine Eingangstemperatur von 150 bis 280 °C und eine Austrittstemperatur von 50 bis 120 °C aufweisen, auf einen bei 145 °C entfernbaren Feuchtigkeitsgehalt von 8 bis 18 Gewichtsprozent trocknet.

10. Körniges Adsorptionsmittel nach einem oder mehreren der Ansprüche 1 bis 6, dadurch gekennzeichnet, daß es mit 2 bis 45 Gewichtsprozent, bezogen auf das Behandlungsprodukt, mit mindestens einem nichtionischen Tensid sowie dessen Gemischen mit weiteren, in Wasch - und Reinigungsmitteln üblichen Zusatzstoffen imprägniert ist.

11. Körniges Adsorptionsmittel nach Anspruch 8, dadurch gekennzeichnet, daß das Zusatzmittel aus Verbindungen der Klasse Enzyme, Biocide, Bleichaktivatoren, Avivagemittel, optische Aufheller sowie anionische und kationische Tenside ausgewählt ist.

12. Körniges Adsorptionsmittel nach anspruch 1 bis 9, dadurch gekennzeichnet, daß das mit dem nichtionischnen Tensid bzw. Zusatzmittel behandelte Adsorptionsmittel mit einem feinpulvrigen Beschichtungsmittel überzogen ist.